# DEMANDE DE BREVET EUROPEEN

(11) **EP 2 927 350 A1**
(43) Date de publication de la demande: **07.10.2015**
(21) Numéro de dépôt: 14001226.1
(22) Date de dépôt: 02.04.2014
(51) Int. Cl.: C25B 13/04, C25B 9/10, C25B 1/10, C25B 3/04

(54) **Cellule électrochimique pour l'électrolyse de l'eau liquide ou vapeur, procédé de fabrication et utilisations**

(71) Demandeur: Sala, Beatrice, 34980 Saint Gely du Fesc (FR)
(72) Inventeur: Sala, Beatrice, 34980 Saint Gely DU Fesc (FR)
(74) Mandataire: Delaveau, Sophie

(57) **Abrégé**

L'invention porte principalement sur une cellule électrochimique pour l'électrolyse de l'eau liquide ou vapeur comprenant un électrolyte à conduction protonique (3) réalisé à base d'aluminosilicates, pris en sandwich entre une anode métallique poreuse (2) et une cathode poreuse conductrice électronique (4).

Avantageusement, l'anode métallique poreuse (2) est un fritté d'alliage inoxydable comportant au moins 18% de chrome.

L'invention porte également sur un procédé de fabrication d'une telle cellule comprenant au moins les étapes de
- fabrication de l'électrolyte à conduction protonique à base d'aluminosilicates (3) et dépôt du dit électrolyte (3) sur l'anode métallique poreuse (2) par voie hydrothermale, et
- dépôt de la cathode poreuse conductrice électronique (4) sur l'électrolyte (3) pour former la cellule électrochimique (1).

L'invention porte enfin sur une utilisation de la dite cellule électrochimique pour la réduction de composés oxydés, tels que des composés oxydés constitués par exemple par du dioxyde de carbone.

## Description

L'invention concerne principalement une cellule électrochimique pour l'électrolyse de l'eau liquide ou vapeur. L'invention porte également sur un procédé de fabrication d'une telle cellule ainsi que sur des applications possibles de cette celllule.

Les cellules électrochimiques utilisées notamment pour les électrolyseurs ou les piles à combustible à moyennes et hautes températures, comportent généralement un électrolyte solide pris en sandwich entre une anode et une cathode.

Les électrolytes solides connus sont réalisés à base d'oxydes ou d'hydroxydes qui, à la température d'utilisation de l'électrolyseur, se présentent sous la forme d'une céramique constituée de grains eux-mêmes constitués d'un réseau cristallin plus ou moins cristallisé capable de faciliter la migrations de charges sous l'effet d'un champ électrique, lesquelles charges sont le plus souvent des lacunes ou des ions comme les protons. Pour ce faire, les électrolytes peuvent être plus ou moins dopés.

On connait quatre types d'électrolyseurs : les électrolyseurs utilisant un électrolyte liquide (potasse) fonctionnant entre 80 et 160°C, les électrolyseurs à électrolyte solide polymérique à conduction protonique fonctionnant entre 80 et 100°C, les électrolyseurs à électrolyte solide céramique à conduction anionique dont l'électrolyte est souvent de la zircone stabilisée à l'yttrium et qui fonctionnent entre 700 et 900°C et les électrolyseurs à électrolyte solide céramique perovskite à conduction protonique fonctionnant entre 500 et 650°C.

Il est connu que l'électrolyse d'eau permet la production d'hydrogène pouvant assurer la réduction de composés oxydés tels que le dioxyde de carbone.

La synthèse d'hydrogène peut être réalisée par un électrolyseur qui comprend des moyens d'introduction de la vapeur d'eau sous pression du côté de l'anode et des moyens d'introduction sous pression du gaz du côté de la cathode

A cet effet, la publication FR2931168 décrit une cellule électrochimique dont l'électrolyte est fait d'une membrane en céramique conductrice de protons, notamment en matériau perovskite dopé.

L'utilisation d'une telle membrane nécessite une adaptation particulière des matériaux constituant les électrodes. En effet, l'utilisation de céramiques peut engendrer une fragilité mécanique de la cellule en raison des différences de coefficient de dilatation thermique entre la céramique et les électrodes.

C'est pourquoi les électrodes de la publication FR 2931168 sont réalisées en cermets, mélange de céramique et de métal, ou en céramique conductrice électronique. Mais la mise en forme de l'assemblage électrode/électrolyte/électrode est difficile en raison de la nécessité d'ajuster la quantité de métal par rapport à la poudre de céramique tout en maintenant une conductivité superficielle suffisante. En outre, les différences de coefficient de dilatation entraînent la formation de fissures après frittage. De plus, ces assemblages demandent à être brasés sur le corps de l'électrolyseur pour séparer les compartiments anodiques et cathodiques, ce brasage étant difficile et coûteux. Enfin, la configuration de la cellule de la publication FR2931168 ne peut être que plane ce qui exclut l'utilisation de cette cellule pour des applications nécessitant une adaptation géométrique particulière.

Dans ce contexte, la présente invention vise une cellules électrochimique pour la réduction notamment de dioxyde de carbone, palliant les inconvénients précités.

La présente invention vise également une cellule électrochimique de configuration géométrique modulable.

Enfin, la présente invention vise un procédé de fabrication d'une telle cellule qui soit simple et peu coûteux.

A cet effet, la cellule électrochimique de l'invention comprend un électrolyte à conduction protonique réalisé à base d'aluminosilicates, pris en sandwich entre une anode métallique poreuse et une cathode poreuse conductrice électronique.

La cellule électrochimique de l'invention peut également comporter les caractéristiques optionnelles suivantes considérées isolément ou selon toutes les combinaisons techniques possibles :
- l'anode métallique poreuse est un fritté d'alliage inoxydable comportant au moins 18% de chrome.
- le fritté d'alliage inoxydable comporte du nickel et/ou du cobalt et/ou du fer.
- la cellule comporte une couche de diffusion des éléments métalliques constituant l'anode métallique poreuse dans l'électrolyte à base d'aluminosilicates résultant d'une complexation par des composés oxycarbonés tels que le formaldéhyde, l'éthanol et les acides carboxyliques.
- la cathode conductrice électronique poreuse est réalisée à base d'alliage de métaux de transition ou de métaux choisis parmi les métaux des groupes IVB, VB, VIB,VIIB,VIIIB,VIIIB et IB, IIB ou de leur alliages.
- la cathode conductrice électronique poreuse comporte du palladium.
- la cathode conductrice électronique poreuse est réalisée à base de composés carbonés tel que du graphèna, de nanotubes de carbone, ou d'un couplage de composés carbonés avec au moins un alliage de métaux de transition ou de métaux choisis parmi les métaux des groupes IVB, VB, VIB,VIIB,VIIIB,VIIIB et IB, IIB ou de leur alliages.
- les aluminosilicates sont sous forme de phyllosilicates tel que la dickite du groupe de la kaolinite et/ou le clinochlore du groupe de la chlorite, et/ou de zéolithes.
- la cellule est de configuration tubulaire.

L'invention porte également sur un procédé de fabrication de la cellule précédemment décrite qui est essentiellement caractérisé en ce qu'il comporte au moins les étapes de :
- fabrication de l'électrolyte à conduction protonique à base d'aluminosilicates et dépôt du dit électrolyte sur l'anode métallique poreuse par voie hydrothermale, et
- dépôt de la cathode poreuse conductrice électrique sur l'électrolyte pour former la cellule électrochimique.

Le procédé de l'invention peut également comporter les caractéristiques optionnelles suivantes considérées isolément ou selon toutes les combinaisons techniques possibles :
- l'étape de fabrication de l'électrolyte et de dépôt du dit électrolyte sur l'anode est réalisée dans un autoclave sous pression de 1 à 100 bars et comprend les étapes de :
   - mélange de poudres comportant au moins de la silice et de l'alumine,
   - introduction d'une solution aqueuse dans l'autoclave, laquelle solution présente un caractère basique dont le pH est compris entre 8 et 10 par ajout de base telle que de l'ammoniaque, de l'éthanol amine ou de la morpholine,

   - introduction de l'anode en fritté d'alliage inoxydable dans l'autoclave,
   - introduction d'une cathode en métal noble,
   - montée en température de l'autoclave,
   - polarisation de l'anode et de la cathode en métal noble, ce dont il résulte une dissolution des poudres et le dépôt de ces poudres sur l'anode accéléré par la polarisation.
- des additifs choisis parmi des sels alcalins et/ou des composés alcalinoterreux sont ajoutés au mélange de silice et d'alumine, ainsi que des composés oxycarbonés comme le formaldéhyde, l'éthanol et /ou les acides carboxyliques.
- la montée en température de l'autoclave est réalisée jusqu'à une température comprise entre 300°C et 400° qui est maintenue pendant un temps compris entre 1 et 5000 heures.
- le dépôt de la cathode poreuse conductrice électronique est réalisé sur l'électrolyte préalablement déposé sur l'anode, par voie physique, par projection ou enduction d'un spray, par électrodéposition et/ou par voie chimique et par dépôt chimique :
   - d'alliage de métaux de transition ou de métaux choisis parmi les métaux des groupes IVB, VB, VIB,VIIB,VIIIB,VIIIB et II3, IIB ou de leur alliages, suivi d'un dépôt électrolytique ou chimique de cuivre.
   - de composés carbonés tel que du graphène, par exemple par enduction d'oxyde de graphène ultérieurement réduit par vole chimique, électrochimique ou physique, des nanotubes de carbone, ou d'un couplage de composés carbonés avec au moins un alliage de métaux de transition ou de métaux choisis parmi les métaux des groupes IVB, VB, VIIB,VIIB,VIIB,VIIIB et IB, IIB ou de leur alliages.

L'invention porte également sur une utilisation de la cellule précédemment décrite pour la réduction de composés oxydés, tels que des composés oxydés comme par exemple du dioxyde de carbone par les espèces chimiques réactives formées par électrolyse de l'eau, laquelle réduction est réalisée dans le compartiment cathodique entre 100 et 400°C, pour la production d'hydrogène dans le compartiment cathodique et/ou pour l'oxydation de composés réduits dans le compartiment anodique.

D'autres caractéristiques et avantages de l'invention ressortiront clairement de la description qui en est donnée ci-dessous, à titre indicatif et nullement limitatif, en référence aux figures annexées parmi lesquelles:
- la figure 1 est une représentation schématique en coupe de la cellule électrochimique de l'invention,
- la figure 2 est une photographie prise au Microscope Electronique à Balayage de l'électrolyte en aluminosilicates après dépôt sur l'anode frittée, et
- la figure 3 est une photographie en coupe prise au Microscope Electronique à Balayage de l'électrolyte en aluminosilicates déposé sur l'anode frittée,
- la figure 4 est une photographie prise au Microscope Electronique à Balayage illustrant la formation de rosace de silice sur une anode dans un milieu silicaté, et
- la figure 5 est une photographie prise au Microscope Electronique à Balayage du dépôt électrolytique de la cathode en nickel sur l'électrolyte en aluminosilicates.

La cellule électrochimique de l'invention comporte un électrolyte à base d'aluminosilicates qui est fabriqué et déposé par voie hydrothermale sur une anode faite d'un fritté métallique. La cathode faite d'un matériau poreux conducteur électronique est déposée ensuite sur l'électrolyte.

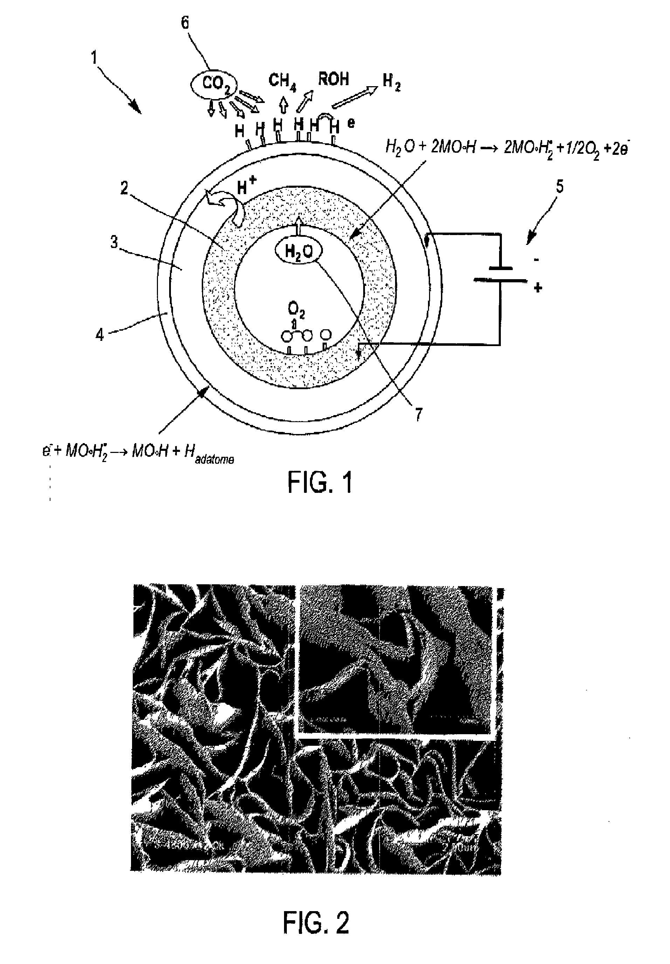

En référence à la figure 1, l'électrolyseur 1 de l'invention comprend une anode 2, un électrolyte en aluminosilicate 3, une cathode 4 et un générateur 5 qui génère un courant avec une différence de potentiel entre l'anode 2 et la cathode 4.

L'électrolyseur 1 comporte également des moyens 6 d'introduction de composés oxydés gazeux sous pression dans le compartiment cathodique 4 et des moyens 7 d'introduction de l'eau vapeur ou liquide sous pression dans le compartiment anodique 2.

L'eau est oxydée au niveau de l'anode 2 en libérant des électrons, en libérant de l'oxygène, et en formant des ions H⁺ qui migrent à travers l'électrolyte 3 jusqu'à la surface de la cathode 4 où ils sont réduits en adatomes H° qui réagissent avec les composés oxydés gazeux en formant des composés du type hydrocarbures comme le méthane et les alcools ROH. Ces adatomes H° peuvent également conduire à la formation d'hydrogène en s'appariant du côté cathodique 4.

Comme illustré sur la figure 1, l'électrolyseur 1 de l'invention peut présenter une forme tubulaire. Cette configuration tubulaire est avantageuse de par les larges surfaces d'échanges qu'elle engendre avec les composés oxydés gazeux du côté de la cathode et l'eau sous pression du côté de l'anode. Dans le cadre de la configuration tubulaire, on peut prévoir un assemblage de cellules électrochimiques tubulaires en série ou en parallèle sur une virole comparable à la géométrie des échangeurs thermiques.

L'électrolyseur 1 peut également être plan ou présenter toute autre configuration adaptée à son application.

L'utilisation d'aluminosilicates pour réaliser l'électrolyte 3 comporte de nombreux avantages.

En premier lieu, l'électrolyseur résultant 1 fonctionne à des températures comprises entre 100 et 400 °C. Ces températures moyennes permettent de limiter la corrosion des électrodes.

En outre, les aluminosilicates présentent de bonnes propriétés d'adhérence sur le métal, ce dont il résulte la possibilité d'utiliser une anode en métal non noble.

Par ailleurs, et comme il sera détaillé plus loin, l'aluminosilicate peut faire l'objet d'un dépôt sur l'anode, ce dont il résulte la possibilité d'utiliser tout type de configuration géométrique pour l'assemblage anode/électrolyte/cathode, c'est-à-dire le coeur de l'électrolyseur, et ainsi une adaptation générale de la configuration géométrique de l'électrolyseur à l'application qui lui est destinée.

Plus précisément, l'aluminosilicate constituant l'électrolyte est un aluminosilicate de type phyllosilicate et/ou zéolithe.

Ces deux structures ont l'avantage de présenter une conductivité qui évolue en fonction de la teneur en eau.

Plus précisément, les phyllosilicates sont faits de feuillets superposés constitués de couches de tétraèdres SiO₄ et de couches d'octaèdres Al(OH)₆ reliées par des atomes d'oxygène et des ions OH⁻ qui sont mis en commun. La présence d'ions Al³⁺ au lieu des ions Si⁴⁺ induit une charge négative au réseau. Cette charge négative de chaque feuillet est compensée par la charge de cations intercalaires tels que Fe²⁺, Al³⁺, Mg²⁺, Mn²⁺ ou Ni²⁺ qui sont hydroxyles, voire les protons H⁺, l'ensemble participant ainsi à la mobilité des protons.

Deux phyllosilicates particuliers sont préférentiellement formés, il s'agit de la dickite qui appartient au groupe des kaolinites et le clinochlore qui appartient au groupe des chlorites.

En variante, l'aluminosilicate peut être une zéolithe qui présente également une structure sous forme de cage composée d'ions Si⁴⁺et d'ions Al³⁺ qui sont reliées par des atomes O et des ions OH⁻ qui sont mis en commun.

L'anode 2 est constitué d'un fritté d'alliage inoxydable comportant au moins 18% de chrome ainsi que du fer, du nickel et/ou du cobalt.

L'utilisation de tels matériaux pour réaliser l'anode est avantageux tant en terme de corrosion puisque ces alliages se corrodent très superficiellement, mais également pour assurer une bonne adhésion du dépôt d'aluminosilicate comme il sera détaillé plus loin.

La cathode 4 est constituée d'un dépôt poreux qui peut être est réalisé à base de métaux de transition ou de métaux choisis parmi les métaux des groupes IVB, VB, VIB,VIIB,VIIIB,VIIIB ou IB, IIB ou de leurs alliages. On préférera l'utilisation d'alliage de métaux de transition tel que le nickel et ses alliages, le cobalt et ses alliages ou les alliages de cuivre. Avantageusement, le dépôt poreux comporte également du palladium associé au cuivre qui est un bon catalyseur pour les réactions de réduction du dioxyde de carbone.

En variante, la cathode 4 est constituée de composés carbonés tels que des nanotubes de carbones ou du graphène, ou d'un couplage de composés carbonés avec au moins un alliage de métaux de transition ou de métaux choisis parmi les métaux des groupes IVB, VB, VIB,VIIB,VIIIB,VIIIB et IB, IIB ou de leur alliages.

On décrit ci-après un exemple non limitatif de procédé de fabrication de l'électrolyseur de l'invention.

La fabrication et le dépôt de l'électrolyte d'aluminosilicate sur l'anode faite en fritte métallique sont réalisés par voie hydrothermale. On entend par voie hydrothermale un milieu aqueux qui peut-être sous pression.

La première étape consiste à mélanger des poudres dans un autoclave désaéré. Le mélange de poudres comporte au moins de la silice et de l'alumine. Des additifs permettant de stabiliser les poudres et de neutraliser la surface de la silice peuvent être ajoutés. Ces additifs sont choisis parmi les sois alcalins (Na, K, Li, NH4+) et les alcalino terreux (Mg,Sr,Ca,Ba).

Une solution aqueuse alcaline de pH compris entre 8 et 10 est introduite dans l'autoclave. Cette solution basique est réalisée par ajout d'une base telle que l'ammoniaque, l'éthanol amine ou la morpholine. Le caractère alcalin de la solution permet de faciliter la dissolution de la silice et de l'alumine.

On introduit également dans l'autoclave des composés oxycarbonés complexant tels que du formaldéhyde, ou des acides carboxyliques. Les bases précédentes l'éthanol amine, de la morpholine ayant aussi un caractère complexant. Ces éléments favorisent la complexation des éléments métalliques constituant l'anode métallique, voire leur dissolution superficielle, et engendrent ainsi la formation d'aluminosilicates de ces éléments métalliques, ce qui permet d'obtenir une bonne adhérence des aluminosilicates sur l'anode. On observe alors sur la cellule 1 la présence d'une couche de diffusion des éléments métalliques constituant l'anode métallique poreuse 2 dans l'aluminosilicate.

On introduit également dans l'autoclave l'anode constituée d'un fritté d'alliage inoxydable tel que précédemment décrit. L'anode pourra être revétue d'une couche de fer pour favoriser l'adhérence de l'électrolyte et pour augmenter l'épaisseur du dépôt de l'électrolyte par substitution de l'aluminium dans l'aluminosilicate.

On place dans le fond de l'autoclave une électrode de référence de type Ag/AgCl pour mesurer puis piloter le potentiel de l'anode.

L'atmosphère de l'autoclave est ensuite chauffée jusqu'à environ 300°C et la pression ajustée entre 1 et 100 bars. Les poudres se dissolvent jusqu'à 250°C puis précipitent vers 300°C. Au cours de la dissolution, l'aluminium se substitue au silicium en créant un réseau cristallin de charge négative dans lequel vont s'insérer les protons.

On peut améliorer la densification des aluminosilicates des éléments métalliques de l'anode et accélérer la fabrication et le dépôt des aluminosilicates sur l'anode par voie électrochimique.

Pour ce faire, on place également dans l'autoclave une cathode sous forme d'une grille de platine. Les électrodes sont alors polarisées dans la zone de stabilité de l'eau entre -600 et +800mV/ électrode à hydrogène, avec un écart de potentiel de 600 mV entre l'anode et la cathode.

De cette façon, la densification des aluminosilicates de l'anode augmente. On cherche à atteindre une densification de 90%. L'épaisseur de cette couche densifiée est optimisée en fonction de la chute ohmique désirée lors de l'utilisation de l'électrolyseur sous pression de vapeur d'eau ou d'eau liquide.

Il est à noter que si l'anode joue le rôle d'électrode à la fois lors de la fabrication de l'électrolyseur et lors de son utilisation, la cathode placée dans l'autoclave ne joue le rôle d'électrode que dans le cadre du dépôt de l'aluminosilicate sur l'anode.

Le temps pendant lequel l'atmosphère de l'autoclave est maintenue à 300°C varie entre 1 et 5000 heures. Lorsque l'on utilise la voie électrochimique qui vient d'être décrite, le temps de maintien de l'atmosphère de l'autoclave à 300°C sera fortement réduit. Au contraire, sans utiliser la voie électrochimique, le temps de maintien à 300°C pourra être de plusieurs centaines d'heures jusqu'à 5000 heures.

En variante, l'anode peut être préalablement immergée dans un sol-gel avant que soit procédé au dépôt des poudres par la voie hydrothermale précédemment décrite.

La photographie de la figure 2 montre le dépôt de l'électrolyte d'aluminosilicates greffé sur l'anode. Ce dépôt a été obtenu par une mélange de silice et d'alumine auxquels ont été ajoutés des additifs sous forme de phosphates de calcium et de carbonates de calcium pour stabiliser les poudres, ainsi que des amines, des acétates et des formiates pour améliorer l'adhérence des aluminosilicates sur l'anode.

Le dépôt des poudres sur l'anode est réalisé au potentiel libre pendant plusieurs centaines d'heures à une température de 250°C.

On constate sur cette figure l'aspect alvéolaire de l'électrolyte d'aluminosilicate.

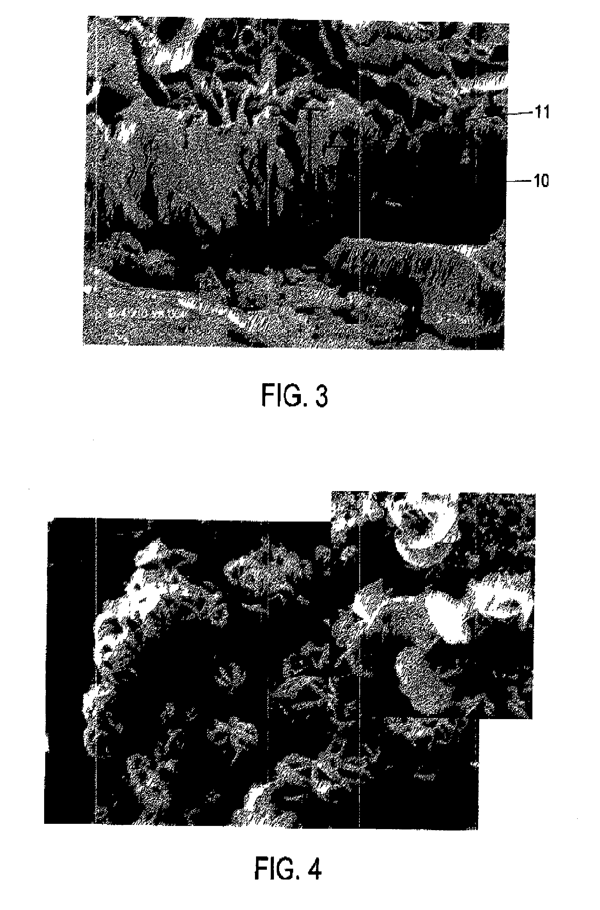

La figure 3 montre l'électrolyte d'aluminosilicate 3 en coupe comportant une partie dense 10 d'épaisseur d'environ 0,868 nanomètre en contact avec l'anode 2, et une partie alvéolaire 11 au potentiel libre.

L'accélération de la vitesse du dépôt peut être obtenue par polarisation galvanostatique et /ou potentiostatique de l'anode dès la température ordinaire comme le montre la figure 4 avec la formation de rosace de silice sur une anode dans un milieu silicaté et par application d'une différence de potentiel de 2 Volts entre l'anode et la cathode.

Une fois le dépôt de l'électrolyte 3 réalisé sur l'anode 2, l'ensemble est sorti de l'autoclave et on procède au dépôt de la cathode 4 précédemment décrite sur l'électrolyte 3.

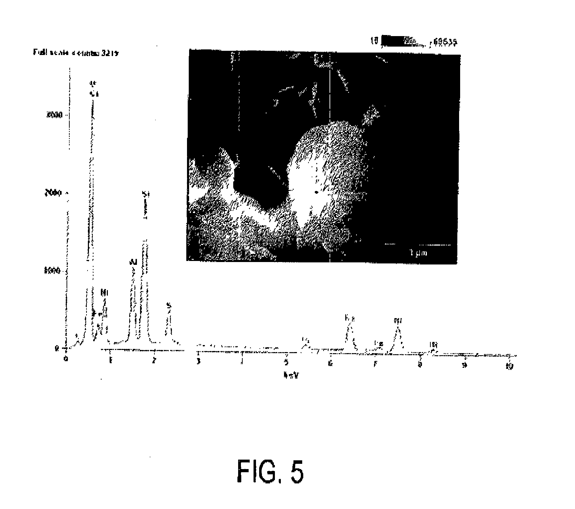

Quatre voies de dépôts sur la cathode ont été testées.
- un dépôt chimique de nickel avec une solution de Brenner (NiCl₂.6H₂O à 30g/l, NH₄Cl à 50g/l et (NH₄)₂HC₆H₅O₇ à 65g/l) suivi d'un dépôt électrolytique de cuivre ou d'un dépôt chimique de cuivre avec une solution composée de SnCl₂, CuSO₄, 5H₂O, du citrate de sodium et du formaldéhyde à pH 3.
- un dépôt électrolytique de nickel en milieu sulfamate ((NH₂SO₃)₂Ni à 300g/l et H₃BO₃ à 40g/l à pH 7 et une température de 60°C) en mode galvanostatique entre 0,05 et 100mA/cm². Ce dépôt peut être suivi d'un dépôt électrolytique de cuivre en milieu sulfate de cuivre. La figure 5 illustre à cet effet le dépôt nickel poreux obtenu par cette voie électrolytique sur la couche d'aluminosilicate. L'analyse dispersive en énergie (EDX) présentée sur cette même figure, caractérise la présence de nickel sur la couche d'aluminosilicate contenant du fer issu du support.
- dépôt sous vide au moyen d'un canon à électrons
- dépôt de graphène par enduction d'oxyde de graphéne ultérieurement réduit par voie chimique, électrochimique ou physique.

Comme précisé plus haut, l'électrolyseur de l'invention est avantageusement utilisé à des températures de fonctionnement comprises entre 100 et 400°C. L'électrolyseur permet de produire de l'hydrogène ou de réduire par hydrogénation des composés oxydés tels que du dioxyde de carbone dans le compartiment cathodique.

## Revendications

1. Cellule électrochimique pour l'électrolyse de l'eau liquide ou vapeur comprenant un électrolyte à conduction protonique (3) réalisé à base d'aluminosilicates, pris en sandwich entre une anode métallique poreuse (2) et une cathode poreuse conductrice électronique (4).

2. Cellule électrochimique selon la revendication 1, **caractérisée en ce que** l'anode métallique poreuse (2) est un fritté d'alliage inoxydable comportant au moins 18% de chrome.

3. Cellule électrochimique selon la revendication 2, **caractérisée en ce que** le fritté d'alliage inoxydable comporte du nickel et/ou du cobalt et/ou du fer.

4. Cellule électrochimique selon l'une quelconque des revendications 2 à 5, **caractérisée en ce qu'**elle comporte une couche de diffusion des éléments métalliques constituant l'anode métallique poreuse (2) dans l'électrolyte à base d'aluminosilicates (3) résultant d'une complexation par des composés oxycarbonés tels que le formaldéhyde, l'éthanol et les acides carboxyliques.

5. Cellule électrochimique selon l'une quelconque des revendications 1 à 4, **caractérisée en ce que** la cathode conductrice électronique poreuse (4) est réalisée à base d'alliage de métaux de transition ou de métaux choisis parmi les métaux des groupes IVB, VB, VIB,VIIB,VIIIB,VIIIB et IB, IIB ou de leur alliages.

6. Cellule électrochimique selon la revendication 5, **caractérisée en ce que** la cathode conductrice électronique poreuse (4) comporte du palladium.

7. Cellule électrochimique selon l'une quelconque des revendications 1 à 4, **caractérisée en ce que** la cathode conductrice électronique poreuse (4) est réalisée à base de composés carbonés tel que du graphène, de nanotubes de carbone, ou d'un couplage de composés carbonés avec au moins un alliage de métaux de transition ou de métaux choisis parmi les métaux des groupes IVB, VB, VIB,VIIB,VIIIB,VIIIB et IB, IIB ou de leur alliages.

8. Cellule électrochimique selon l'une quelconque des revendications précédentes, **caractérisée en ce que** les aluminosilicates sont sous forme de phyllosilicates tel que la dickite du groupe de la kaolinite et/ou le clinochlore du groupe de la chlorite, et/ou de zéolithes.

9. Cellule électrochimique selon l'une quelconque des revendications précédentes, **caractérisée en ce qu'**elle est de configuration tubulaire.

10. Procédé de fabrication d'une cellule électrochimique selon l'une quelconque des revendications 1 à 9 comprenant au moins les étapes de
- abrication de l'électrolyte à conduction protonique à base d'aluminosilicates (3) et dépôt du dit électrolyte (3) sur l'anode métallique poreuse (2) par voie hydrothermale, et
- dépôt de la cathode poreuse conductrice électrique (4) sur l'électrolyte (3) pour former la cellule électrochimique (1).

11. Procédé selon la revendication 10, **caractérisé en ce que** l'étape de fabrication de l'électrolyte (3) et de dépôt du dit électrolyte (3) sur l'anode (2) est réalisée dans un autoclave sous pression de 1 à 100 bars et comprend les étapes de :
- mélange de poudres comportant au moins de la silice et de l'alumine,
- introduction d'une solution aqueuse dans l'autoclave, laquelle solution présente un caractère basique dont le pH est compris entre 8 et 10 par ajout de base telle que de l'ammoniaque, de l'éthanol amine ou de la morpholine,
- introduction de l'anode (2) en fritté d'alliage inoxydable dans l'autoclave,
- introduction d'une cathode en métal noble,
- montée en température de l'autoclave,
- polarisation de l'anode (2) et de la cathode en métal noble, ce dont il résulte une dissolution des poudres et le dépôt de ces poudres sur l'anode (2) accéléré par la polarisation.

12. Procédé selon l'une quelconque des revendications 10 et 11, **caractérisé en ce que** des additifs choisis parmi des sels alcalins et/ou des composés alcalinoterreux sont ajoutés au mélange de silice et d'alumine, ainsi que des composés oxycarbonés comme le formaldéhyde, l'éthanol et /ou les acides carboxyliques.

13. Procédé selon l'une quelconque des revendications 11 et 12, **caractérisé en ce que** la montée en température de l'autoclave est réalisée jusqu'à une température comprise entre 300°C et 400° qui est maintenue pendant un temps compris entre 1 et 5000 heures.

14. Procédé selon l'une quelconque des revendications 10 à 13, **caractérisé en ce que** le dépôt de la cathode poreuse conductrice électronique (4) est réalisé sur l'électrolyte (3) préalablement déposé sur l'anode (2), par voie physique, par projection ou enduction d'un spray, par électrodéposition et/ou par voie chimique et par dépôt chimique :
- d'alliage de métaux de transition ou de métaux choisis parmi les métaux des groupes IVB, VB, VIB,VIIB,VIIIB,VIIIB et IB, IIB ou de leur alliages, suivi d'un dépôt électrolytique ou chimique de cuivre.
- de composés carbonés tel que du graphène, par exemple par enduction d'oxyde de graphène ultérieurement réduit par voie chimique, électrochimique ou physique, des nanotubes de carbone, ou d'un couplage de composés carbonés avec au moins un alliage de métaux de transition ou de métaux choisis parmi les métaux des groupes IVB, VB, VIB,VIIB,VIIIB,VIIIB et IB, IIB ou de leur alliages.

15. Utilisation de la cellule électrochimique selon l'une quelconque des revendications 1 à 9 pour la réduction de composés oxydés, tels que des composés oxydés comportant par exemple du dioxyde de carbone par les espèces chimiques réactives formées par électrolyse de l'eau, laquelle réduction est réalisée dans le compartiment cathodique entre 100 et 400°C, pour la production d'hydrogène dans le compartiment cathodique et/ou pour l'oxydation de composés réduits dans le compartiment anodique.
